# DEMANDE DE BREVET EUROPEEN

(11) **EP 2 042 380 A2**
(43) Date de publication de la demande: **01.04.2009**
(21) Numéro de dépôt: 08161676.5
(22) Date de dépôt: 01.08.2008
(51) Int. Cl.: B60R 19/24

(54) **Dispositif de fixation laterale d'un pare-chocs sur la structure d'un vehicule, et procede de montage et de fixation d'un pare-chocs au moyen d'un tel dispositif**

(30) Priorité: 25.09.2007 FR 0757847
(71) Demandeur: Peugeot Citroën Automobiles SA, 78140 Vélizy-Villacoublay (FR)
(72) Inventeur: Dietemann, Sylvain, 90100 Chavannes les Grands (FR)
(74) Mandataire: Fernandez, Francis Lionel

(57) **Abrégé**

Le pare-chocs comprend, de manière classique, une partie centrale et deux retours latéraux ou crosses.

Le dispositif de fixation latérale est constitué, pour chaque crosse, d'une pièce montée mobile sur la crosse, désignée romaine (1), qui comprend des moyens de positionnement de la crosse sur la structure dans une position intermédiaire dans laquelle le pare-chocs est amovible suivant une direction de démontage, et des moyens pour verrouiller ladite crosse sur la structure dans une position finale dans laquelle le pare-chocs est bloqué par rapport à la structure suivant la direction de démontage. La romaine (1) est susceptible de passer de la position intermédiaire à la position finale par simple translation par rapport à la crosse et à la structure dans une direction de fixation.
- Véhicules automobiles. Montage des pare-chocs des véhicules automobiles.

## Description

La présente invention concerne un dispositif de fixation latérale d'un pare-chocs sur la structure - ou caisse - d'un véhicule, en particulier d'un véhicule automobile. Elle concerne également un procédé de montage et de fixation d'un pare-chocs sur une structure de véhicule au moyen d'un tel dispositif.

Un pare-chocs de véhicule comporte, de manière classique, une partie centrale et deux parties latérales ou retours ou crosses susceptibles de protéger la partie adjacente des ailes du véhicule. D'autre part, un pare-chocs est constitué généralement d'une peau sur son côté extérieur et visible et de parties de renfort au moins partiellement plaquées contre la peau.

On connaît déjà, par exemple selon le document FR 2 672 021, un dispositif de fixation d'un pare-chocs sur la caisse d'un véhicule, qui comprend des moyens de guidage et de fixation latérale des retours du pare-chocs sur les ailes du véhicule. Ces moyens de guidage et de fixation comprennent une boutonnière et une encoche associées à l'aile et alignées de façon à définir l'axe de translation du pare-chocs dont les retours comportent une vis et un tenon susceptibles de s'engager respectivement dans la boutonnière et l'encoche.

La fixation d'un pare-chocs sur la structure d'un véhicule selon les procédés de montage actuellement connus et mis en oeuvre nécessite la présence de pièces rapportées sur la structure du véhicule. De plus, ces procédés connus incluent, le plus souvent, une opération par laquelle on vient rabattre les retours ou crosses du pare-chocs.

Le but de la présente invention est de fournir un dispositif de fixation latérale d'un pare-chocs sur la structure d'un véhicule, en particulier d'un véhicule automobile, qui assure un bon plaquage et un bon affleurement du pare-chocs sur la structure du véhicule, par conséquent un bel aspect de fini du véhicule, conformément aux cahiers des charges de fabrication automobile, sans qu'il soit nécessaire d'avoir une opération par laquelle on vient rabattre les crosses et sans que soient nécessitées des pièces de fixation rapportées sur la caisse du véhicule.

Un autre but de la présente invention est de fournir un tel dispositif, qui facilite la fixation du pare-chocs sur la structure du véhicule dans un environnement où l'accès pour le guidage, le positionnement et les fixations est difficile.

C'est aussi un but de la présente invention de fournir un procédé de montage et de fixation d'un pare-chocs sur une structure de véhicule au moyen d'un tel dispositif, qui soit de conception simple, qui exige des moyens d'assemblage réduits, qui soit de mise en oeuvre aisée, et qui soit économique du fait également d'un investissement limité au niveau de l'ouillage de montage et de fixation.

Pour parvenir à ces buts, la présente invention fournit un nouveau dispositif de fixation latérale d'un pare-chocs sur la structure d'un véhicule, en particulier d'un véhicule automobile, le pare-chocs comprenant une partie centrale et deux retours latéraux ou crosses. Ce nouveau dispositif est constitué, pour chaque crosse, d'une pièce - désignée aussi romaine - montée mobile sur la crosse, qui comprend des moyens de positionnement de la crosse sur la structure dans une position intermédiaire dans laquelle le pare-chocs est amovible suivant une direction de démontage, et des moyens pour verrouiller ladite crosse sur la structure dans une position finale dans laquelle le pare-chocs est bloqué par rapport à la structure suivant la direction de démontage. La pièce mobile est susceptible de passer de la position intermédiaire à la position finale par simple translation par rapport à la crosse et à la structure dans une direction de fixation, qui est la direction longitudinale de la pièce mobile.

Selon un mode préféré de réalisation de l'invention, les moyens de positionnement de la crosse de pare-chocs sur la structure dans la position intermédiaire dans laquelle le pare-chocs est amovible suivant une direction de démontage sont constitués par des axes à épaulement solidaires de la structure du véhicule et des lumières correspondantes aménagées dans la romaine pour le passage des épaulements desdits axes à épaulement.

Selon un mode préféré de réalisation de l'invention également, les moyens pour verrouiller la crosse sur la structure dans une position finale dans laquelle le pare-chocs est bloqué par rapport à la structure suivant la direction de démontage sont constitués par des extensions des lumières de positionnement, de largeur inférieure à la largeur des épaulements des axes à épaulement, de telle sorte que, lorsque la pièce mobile passe de la position intermédiaire à la position finale par simple translation par rapport à la crosse et à la structure dans une direction de fixation, il y a verrouillage de la crosse par rapport à la structure.

De manière préférentielle, la romaine présente une forme obtenue par emboutissage dans la zone périphérique des extensions des lumières de positionnement, de façon à assurer et à maintenir un effort de placage constant de la crosse de pare-chocs sur la structure.

De manière préférentielle également, la romaine est montée mobile sur le renfort latéral de la crosse.

Le maintien de la romaine en position de fixation peut être réalisé, de préférence, au moyen d'une agrafe.

La romaine peut être guidée sur le renfort latéral de crosse dans son mouvement selon la direction de fixation au moyen de tenons de guidage, qui coopèrent avec le rebord latéral de la romaine situé du côté de la crosse de pare-chocs.

De préférence, des moyens de centrage sont prévus sur la peau du pare-chocs et la structure, de façon à garantir le positionnement en Y et en Z de la peau de pare-chocs sur la structure.

Ces moyens de centrage peuvent être constitués par des pions de positionnement prévus sur la peau du pare-chocs et coopérant par concordance de forme avec des orifices prévus dans la structure.

La présente invention apporte aussi un nouveau procédé de montage et de fixation d'un pare-chocs sur une structure de véhicule, qui comporte les étapes suivantes :
- on met en place le pare-chocs avec ses deux renforts latéraux de crosse équipés, chacun, d'un dispositif conforme à celui décrit ci-dessus dans ses grandes lignes par un simple déplacement selon la direction en X du véhicule jusqu'à ce qu'il soit en contact avec la structure,
- on verrouille chaque crosse de pare-chocs sur la structure par un simple déplacement longitudinal de la romaine qui actionne les moyens de verrouillage et les moyens de placage du pare-chocs sur la structure.

De plus, on maintient la romaine en position de verrouillage au moyen d'une agrafe de maintien.

Enfin, de préférence, la peau du pare-chocs est centrée selon les directions Y et Z du véhicule au moyen de pions de positionnement.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- les figures 1A et 1B représentent la pièce mobile - ou romaine - du dispositif de fixation latérale d'un pare-chocs sur la structure d'un véhicule, selon la présente invention,
- la figure 2 représente, de manière schématique, la romaine des figures 1A et 1B assemblée sur un renfort latéral de crosse de pare-chocs, selon la présente invention, avant positionnement et verrouillage sur la structure du véhicule,
- la figure 3 représente, de manière schématique, le renfort latéral de crosse de la figure 2 monté sur une peau de pare-chocs, selon la présente invention,
- la figure 4 est une vue en perspective représentant les moyens d'interface de la structure de véhicule, selon la présente invention,
- la figure 4A est une vue en perspective représentant plus en détail un axe serti constituant des moyens d'interface de la figure 4,
- la figure 5 est une vue en perspective du montage de la romaine sur le renfort latéral de crosse,
- la figure 6 est une vue en perspective des moyens de maintien de la romaine sur le renfort latéral de crosse,
- la figure 7 est une vue agrandie des moyens de maintien représentés sur la figure 6,
- la figure 8 est une vue en perspective qui représente la crosse de pare-chocs en position de montage sur la structure, avant verrouillage des deux pièces, selon la présente invention,
- les figures 9 et 10 sont des vues en perspective, qui représentent en position déverrouillée et en position verrouillée, respectivement, le montage sur la structure d'une crosse de pare-chocs, la peau de pare-chocs n'étant pas représentée pour faciliter la compréhension de l'opération,
- la figure 11 est une vue en perspective représentant le détail de la liaison entre la structure et la crosse avec les moyens permettant d'assurer et de maintenir un effort de placage constant du pare-chocs sur la structure du véhicule,
- la figure 12 est une vue en perspective représentant le moyen de maintien de la romaine en position verrouillée,
- la figure 13 est une vue en perspective, qui représente les moyens de centrage de la peau de pare-chocs, et
- la figure 14 représente, en vue en perspective également, les moyens de la figure 12, la peau de pare-chocs étant à l'engagement.

La présente invention a pour but de fixer latéralement un pare-chocs par rapport à la structure du véhicule en assurant un bon placage et un bon affleurement. Il s'agit, en conséquence, de garantir un jeu nul entre le pare-chocs et la structure.

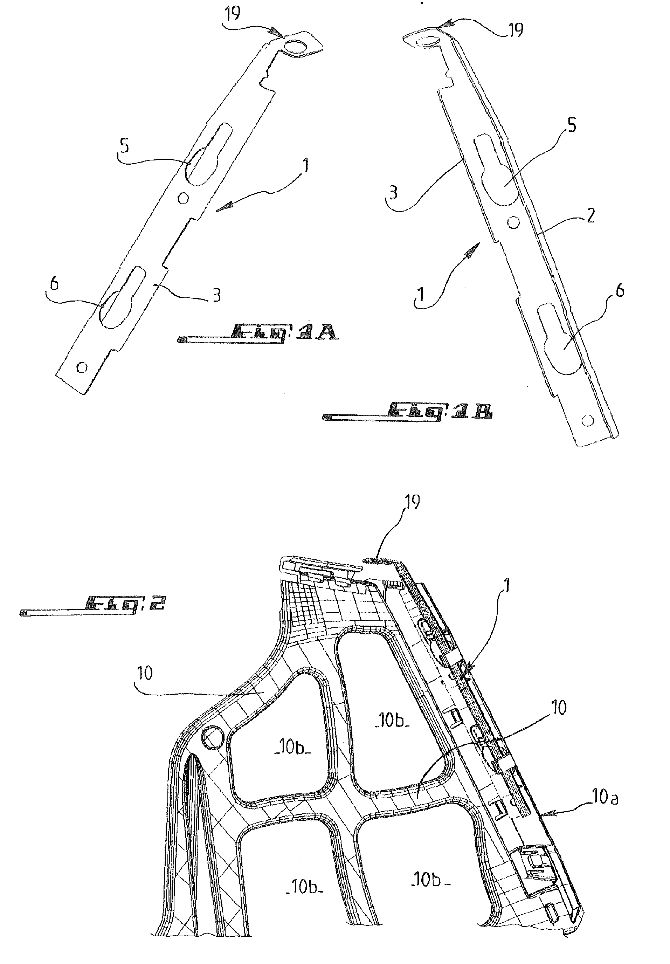

Le moyen de l'invention permettant de réaliser un accostage sans jeu entre le pare-chocs et la structure est constitué par une pièce mobile, désignée aussi « romaine », référencée 1 de manière générale, et représentée en vue avant et arrière sur les figures 1A et 1B. La romaine 1 présente une forme générale de plaque, allongée, de section sensiblement en « U », avec des rebords latéraux 2 et 3 obtenus par pliage et sensiblement à 90° d'angle avec la partie principale de plaque. La romaine 1 comporte des ouvertures, par exemple les ouvertures 5 et 6, et des découpes qui seront décrites plus loin dans le texte. Elle comporte aussi une patte de préhension 19 à son extrémité supérieure dont l'utilité sera également exposée plus loin dans le texte.

Sur le dessin de la figure 2, on a représenté la romaine 1 des figures 1A et 1B assemblée sur un renfort latéral 10 de crosse - ou retour latéral - de pare-chocs. La romaine 1 est dirigée selon la direction de la ligne 10a d'assemblage avec la structure de véhicule, comme il sera décrit en détail dans la suite du texte.

Le renfort latéral 10 de crosse est une structure de renfort ajourée (découpes 10b) qui garantit la rigidité et la tenue mécanique de la crosse de pare-chocs.

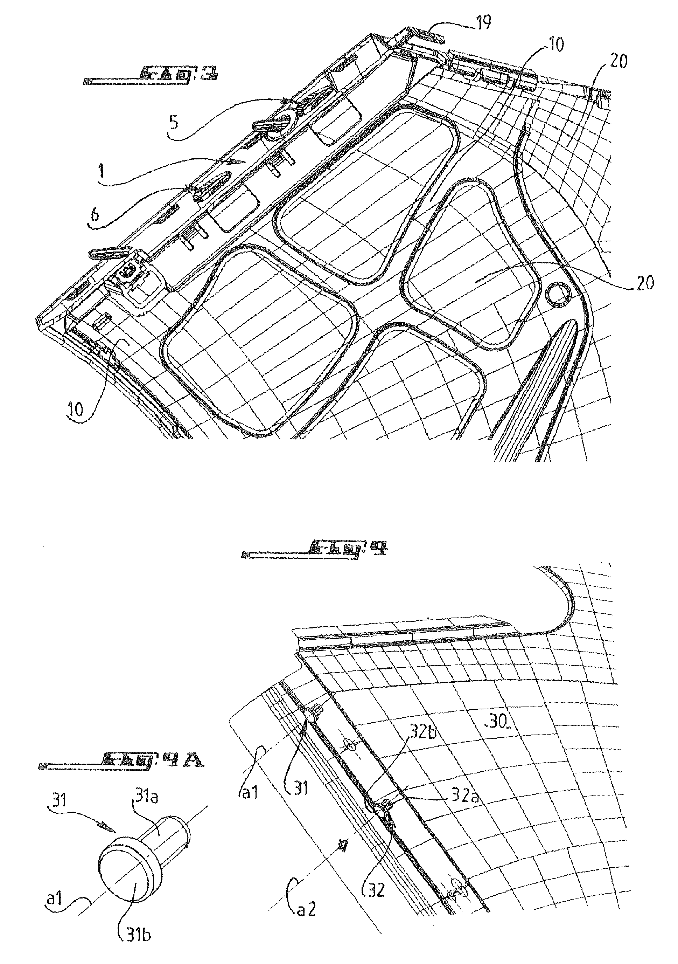

Comme représenté sur le dessin de la figure 3, le renfort latéral 10 de crosse est lui-même monté solidaire de la peau 20 de pare-chocs.

La liaison du renfort latéral 10 de crosse sur la structure 30 du véhicule est représentée sur le dessin de la figure 4. Elle est réalisée par l'intermédiaire de moyens de positionnement constitués par deux axes 31 et 32 sertis sur la tôle de la structure 30, et dirigés selon des axes a₁ et a₂ orthogonaux au plan de la structure 30 dans le voisinage des axes.

Les axes sertis 31 et 32 sont des axes à épaulement. L'axe 31 comporte une partie principale 31a terminée par un épaulement de plus grand diamètre 31b, comme représenté sur le dessin de la figure 4A. L'axe 32 comporte, de la même façon, une partie principale 32a terminée par un épaulement de plus grand diamètre 32b.

Les deux axes sertis 31 et 32 sont destinés, au cours du montage du pare-chocs, à être insérés dans des lumières sensiblement oblongues 5 et 6 (figures 1A, 1B et 3) de la romaine 1, comme il est décrit en détail plus loin dans le texte.

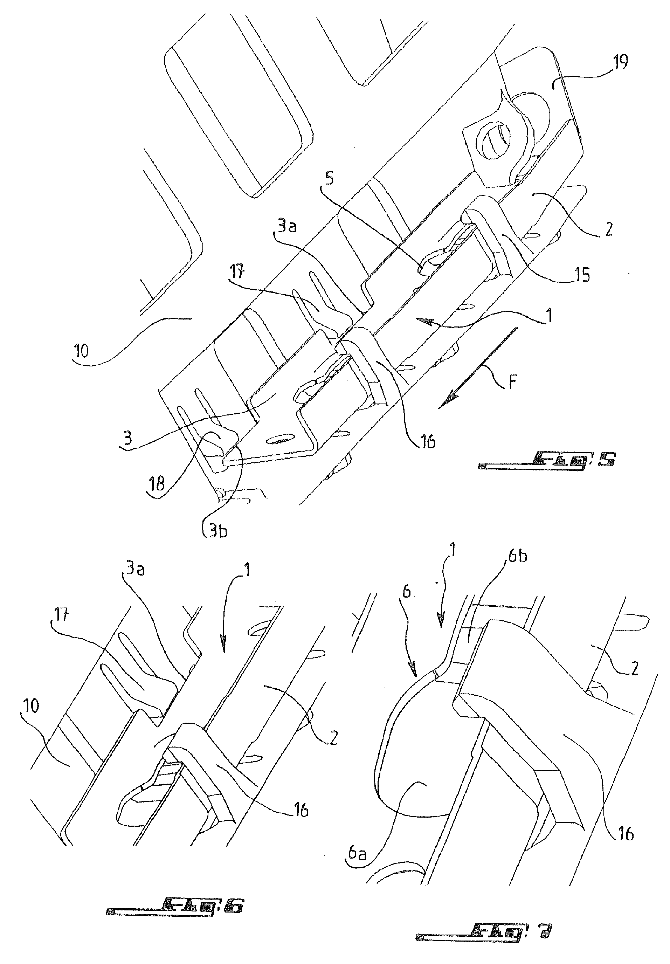

Le pare-chocs est livré au poste de montage avec le renfort latéral 10 de crosse déjà équipé de sa romaine 1, comme montré sur le dessin des figures 2 et 3. Comme représenté sur le dessin des figures 5 et 6, la romaine 1 est guidée, selon sa direction longitudinale F, par deux tenons de guidage 15 et 16, solidaires ou monoblocs avec le renfort latéral 10, qui coopèrent avec le rebord latéral 2 de la romaine 1. L'autre rebord longitudinal 3 de la romaine 1 présente une configuration à découpes 3a, 3b, qui coopèrent avec des tenons 17, 18 situés sur le renfort latéral 10 de manière à maintenir en position la romaine 1 sur le renfort 10.

Sur le dessin de la figure 7, on a représenté plus en détail l'une des deux lumières oblongues identiques de la romaine 1, à savoir la lumière 6. Elle est formée de deux parties adjacentes : une première partie 6a, relativement large, de largeur suffisante pour laisser passer l'épaulement 32b de l'axe serti 32 de la structure 30 de véhicule, et une seconde partie 6b, de largeur plus faible, insuffisante pour laisser passer l'épaulement 32b de l'axe serti 32 mais suffisante pour laisser passer la partie principale 32a de l'axe serti 32 de la structure 30.

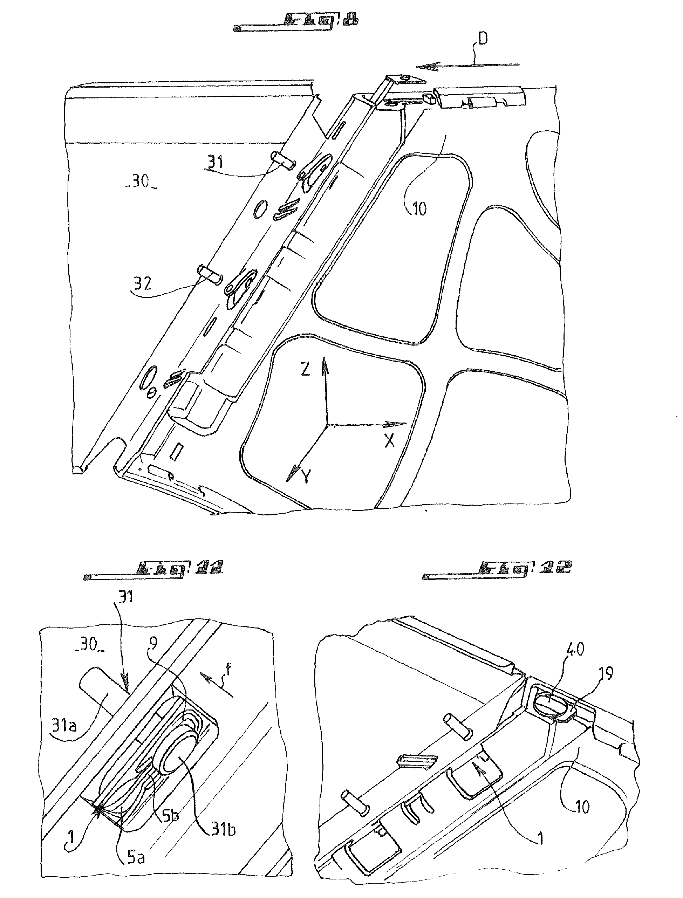

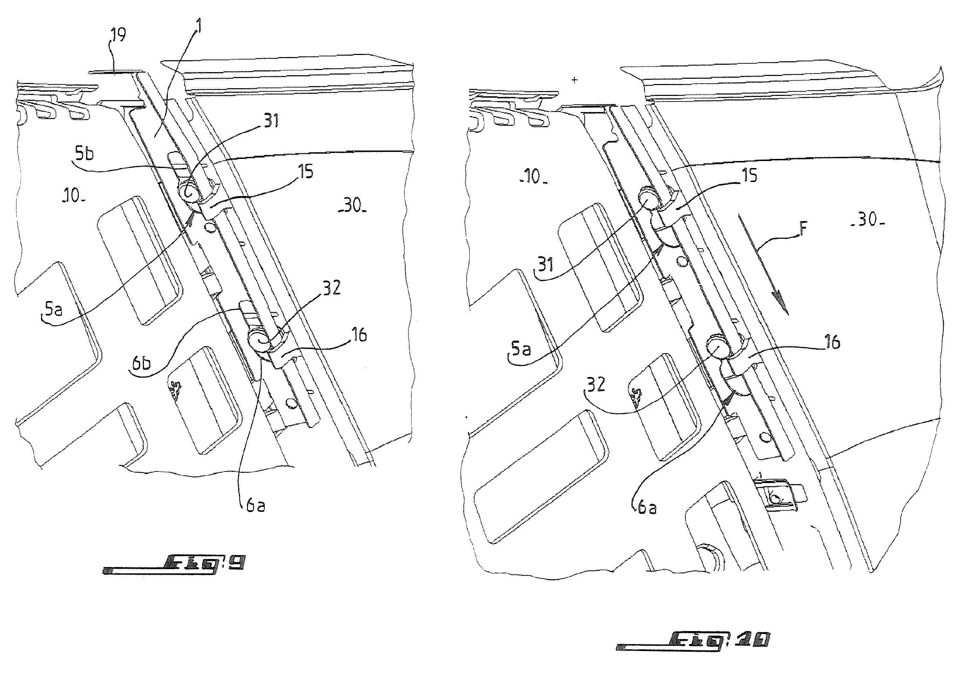

La mise en place du pare-chocs sur la structure 30 du véhicule se fait par un déplacement du pare-chocs selon la direction X du véhicule, comme représenté par la flèche D de la figure 8. Le positionnement du montage s'effectue par l'insertion du renfort latéral 10 de crosse sur les axes sertis 31 et 32, comme montré sur le dessin de la figure 9 sur laquelle n'est pas représentée la peau du pare-chocs de manière à faciliter la description des éléments d'assemblage, et par conséquent la compréhension du montage.

En position déverrouillée (figure 9), les axes sertis 31, 32 traversent les parties larges 5a, 6a des lumières oblongues 5, 6 respectivement.

En position verrouillée, c'est-à-dire après un déplacement longitudinal de la romaine 1 selon la direction de fixation illustrée par la flèche F de la figure 10, les axes sertis 31, 32 sont engagées et traversent les parties plus étroites 5b, 6b des lumières oblongues 5, 6 respectivement, ce qui a pour résultat de verrouiller le renfort latéral 10 de crosse sur la structure 30.

La liaison entre un axe serti de la structure 30 et une lumière oblongue de la romaine 1 est mieux représentée sur le dessin de la figure 11, sur lequel on a montré un axe serti 31a, 31b en coopération de positionnement et de verrouillage avec la lumière oblongue 5 de la romaine 1. Autour de la lumière oblongue 5, la plaque constitutive de la romaine 1 présente une forme 9 obtenue par emboutissage, de façon à assurer et maintenir un effort de placage constant « f « du pare-chocs sur la structure 30 du véhicule. La forme 9 située autour de la partie étroite 5b de la lumière oblongue 5 est dirigée vers la le renfort 10 de façon à créer le rappel élastique de la force « f », lorsque l'épaulement 31b de l'axe 31 presse sur la forme 9.

La figure 12 représente le moyen de maintien de la romaine 1 en position verrouillée. Ce moyen est constitué par une agrafe 40, qui coopère avec la patte de préhension 19 de la romaine 1.

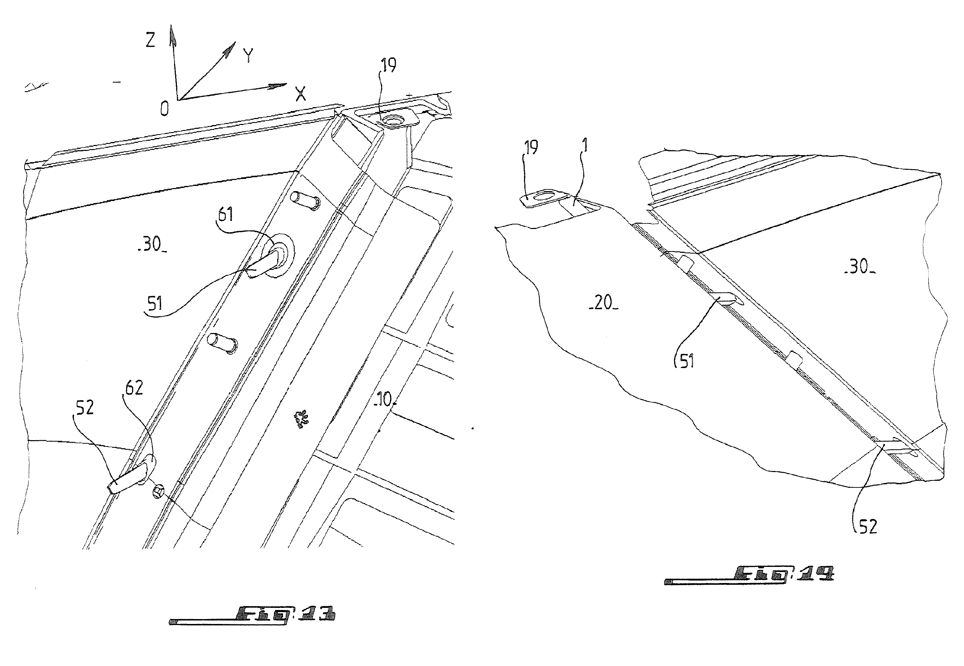

Comme représenté sur le dessin de la figure 13, des pions de positionnement 51 et 52 permettent de garantir le positionnement (centrage) selon les directions en Y et en Z du véhicule de la peau 20 de pare-chocs. Ces pions de positionnement 51, 52 coopèrent par concordance de forme avec des orifices 61, 62, respectivement, prévus dans la structure (30).

Ces pions de positionnement sont représentés sur la figure 14 en position d'engagement de la peau 20 de pare-chocs.

Par rapport aux solutions connues de l'art antérieur, la solution de la présente invention assure une liaison non déformable du pare-chocs par rapport à la structure, due à la rigidité des éléments métalliques d'assemblage.

On notera que les moyens d'assemblage du pare-chocs sur la structure, tels que décrits ci-dessus à titre d'exemple, sont relativement réduits en usine, et l'investissement est très limité au niveau de l'outillage de montage.

Bien entendu, la présente invention n'est pas limitée au mode de réalisation décrit et représenté ci-dessus à titre d'exemple ; d'autres modes de réalisation peuvent être conçus par l'homme de métier sans sortir du cadre et de la portée de la présente invention.

## Revendications

1. Dispositif de fixation latérale d'un pare-chocs sur la structure d'un véhicule, en particulier d'un véhicule automobile, le pare-chocs comprenant une partie centrale et deux retours latéraux ou crosses, **caractérisé en ce qu'**il est constitué, pour chaque crosse, d'une pièce, désignée aussi romaine (1), montée mobile sur la crosse, qui comprend des moyens de positionnement de la crosse sur la structure (30) dans une position intermédiaire dans laquelle le pare-chocs est amovible suivant une direction de démontage, et des moyens pour verrouiller ladite crosse sur la structure (30) dans une position finale dans laquelle le pare-chocs est bloqué par rapport à la structure (30) suivant la direction de démontage, la romaine (1) étant susceptible de passer de la position intermédiaire à la position finale par simple translation par rapport à la crosse et à la structure (30) dans une direction de fixation.

2. Dispositif selon la revendication 1, **caractérisé en ce que** les moyens de positionnement de la crosse sur la structure (30) dans la position intermédiaire dans laquelle le pare-chocs est amovible suivant une direction de démontage sont constitués par des axes (31, 32) à épaulement (31b, 32b) solidaires de la structure (30) du véhicule et des lumières (5, 6) correspondantes aménagées dans la romaine (1) pour le passage des épaulements (31b, 32b) desdits axes (31, 32) à épaulement.

3. Dispositif selon la revendication 2, **caractérisé en ce que** les moyens pour verrouiller la crosse sur la structure (30) dans une position finale dans laquelle le pare-chocs est bloqué par rapport à la structure (30) suivant la direction de démontage sont constitués par des extensions (5b, 6b) des lumières (5, 6) de positionnement, de largeur inférieure à la largeur des épaulements (31b, 32b) des axes (31, 32) à épaulement, de telle sorte que, lorsque la romaine (1) passe de la position intermédiaire à la position finale par simple translation par rapport à la crosse et à la structure dans une direction de fixation (F), il y a verrouillage de la crosse par rapport à la structure (30).

4. Dispositif selon la revendication 3, **caractérisé en ce que** la romaine (1) est emboutie dans la zone périphérique des extensions (5b, 6b) des lumières (5, 6) de positionnement, de façon à assurer et à maintenir un effort de placage constant (f) de la crosse de pare-chocs sur la structure (30).

5. Dispositif selon l'une quelconque des revendications 1 à 4, **caractérisé en ce que** la romaine (1) est montée mobile sur le renfort latéral (10) de crosse.

6. Dispositif selon l'une quelconque des revendications 1 à 5, **caractérisé en ce que** le maintien de la romaine (1) en position de fixation est réalisé au moyen d'une agrafe (40).

7. Dispositif selon l'une quelconque des revendications 5 et 6, **caractérisé en ce que** la romaine (1) est guidée sur le renfort latéral (10) de crosse dans son mouvement selon la direction de fixation (F) au moyen de tenons de guidage 15, 16), qui coopèrent avec le rebord latéral (2) de la romaine (1) situé du côté de la crosse de pare-chocs.

8. Dispositif selon l'une quelconque des revendications 1 à 7, **caractérisé en ce que** des moyens de centrage sont prévus sur la peau (20) du pare-chocs et la structure (30), de façon à garantir le positionnement en Y et en Z de la peau (20) sur la structure (30).

9. Dispositif selon la revendication 8, **caractérisé en ce que** lesdits moyens de centrage sont constitués par des pions de positionnement (51, 52) prévus sur la peau (20) du pare-chocs et coopérant par concordance de forme avec des orifices prévus dans la structure (30).

10. Procédé de montage et de fixation d'un pare-chocs sur une structure (30) de véhicule, le pare-chocs comprenant une partie centrale et deux retours latéraux ou crosses, **caractérisé par** les étapes suivantes :
- on met en place le pare-chocs avec ses deux renforts latéraux (10) de crosse équipés, chacun, d'un dispositif conforme à l'une quelconque des revendications 1 à 9, par un simple déplacement selon la direction en X du véhicule jusqu'à ce qu'il soit en contact avec la structure,
- on verrouille chaque crosse de pare-chocs sur la structure (30) par un simple déplacement longitudinal de la romaine (1) qui actionne les moyens de verrouillage et les moyens de placage du pare-chocs sur la structure (30).

11. Procédé selon la revendication 10, **caractérisé en ce que**, de plus, on maintient la romaine (1) en position de verrouillage au moyen d'une agrafe de maintien (40).

12. Procédé selon l'une quelconque des revendications 10 et 11, **caractérisé en ce que**, de plus, la peau (20) du pare-chocs est centrée selon les directions Y et Z du véhicule au moyen de pions de positionnement (51, 52).
